# EUROPEAN PATENT SPECIFICATION

(11) **EP 3 354 442 B1**
(45) Date of publication and mention of the grant of the patent: **29.06.2022**
(21) Application number: 18151134.6
(22) Date of filing: 11.01.2018
(51) Int. Cl.: B29C 64/255, B29C 64/124

(54) **APPARATUS FOR PRODUCING OBJECTS BY STEREOLITHOGRAPHY AND METHOD FOR PRODUCING OBJECTS BY STEREOLITHOGRAPHY**
VORRICHTUNG ZUR HERSTELLUNG VON OBJEKTEN MITTELS STEREOLITHOGRAPHIE UND VERFAHREN ZUR HERSTELLUNG VON OBJEKTEN MITTELS STEREOLITHOGRAPHIE
APPAREIL ET PROCÉDÉ DE PRODUCTION D'OBJETS PAR STÉRÉOLITHOGRAPHIE

(30) Priority: 25.01.2017 IT 201700007862
(43) Date of publication of application: 01.08.2018
(73) Proprietor: Smart3D.net di Dotta Andrea E Gie' Andrea SNC, 15048 Valenza (AL) (IT)
(72) Inventor: DOTTA, ANDREA, 15048 VALENZA (IT); GIE', ANDREA, 15048 VALENZA (IT)
(74) Representative: Karaghiosoff, Giorgio Alessandro

(56) References cited:
- WO-A1-2016/012389

## Description

The present invention relates to an apparatus for producing objects by stereolithography.

The stereolithography apparatus comprises:
a container for resin intended to be solidified by a polymerization process
which container comprises two opposite walls movable in a direction approaching them and moving them away from each other, substantially in a manner parallel to each other or along a path whose axis is transverse to the surface of at least one of said two walls;
a first wall being transparent to the direction of propagation of an electromagnetic radiation by means of which said resin is radiated;
a second wall being composed of a movable adhesion platform placed in contact with the resin,
a motorized mechanism progressively moving the movable platform away from the first wall with a stepless motion or by advancement steps;
an electromagnetic radiation source that generates an electromagnetic radiation beam with a predetermined distribution of intensity of the radiation variable in a plane parallel to said first wall;
a modulator for the intensity of the electromagnetic radiation that changes the distribution of the intensity thereof along the plane parallel to said first wall in a manner synchronized with the advancement of the movable platform and in a manner corresponding to the cross-section shape of an object to be produced, along a section plane of the object which section plane is parallel to said first wall and intersects the object to be produced in a position along the axis thereof parallel to the direction moving the movable platform away from said first wall which position corresponds to the distance between said first wall and said movable platform.

Generally an apparatus of said type works according to a process providing the following steps:
a) placing the resin in the container on the first wall forming the bottom side of said container,
b) placing the movable wall in the closest position to said first wall,
c) powering the electromagnetic radiation source,
d) progressively moving away the movable wall and
e) changing the distribution of the intensity of the electromagnetic radiation in the plane parallel to said first wall synchronized with the change of the distance moving the second wall away from the first wall corresponding to a change in the position of the section plane of the object to be produced along the axis of said object parallel to the direction displacing said second wall from said first wall till the distance of said two walls corresponds to the complete extension or is higher than said complete extension of the object to be produced along the axis thereof parallel to the direction moving said second wall away from said first wall.

The one just described is the common process for obtaining three-dimensional objects by using stereolithography apparatuses generally called also as 3D printing and which process provides a resin to be solidified by a solidification mechanism by using energy emitted from an electromagnetic radiation such as for example UV or IR light radiation.

The electromagnetic radiation is emitted from a source modulating the intensity distribution along a plane parallel to a section plane of the object to be produced and which intensity distribution is related to shape of the section of the object that means to generate a polymerization of the resin that produces a solid layer of resin corresponding to the cross-section shape of the object to be produced. The advancement of the movable wall or movable platform can be continuous or by steps. In the first manner also the intensity distribution of the electromagnetic radiation will change in a continuous manner and synchronized with the increase in the distance of the wall or movable platform from the first wall. In the second case, the intensity distribution will be modified by steps and the object will be composed of a sequence of layers each one corresponding to a slice with a predetermined thickness along a section plane.

The resin being solidified has a behavior similar to that of glue, therefore it adheres both to the platform and to the bottom of the vat.

Known prior art apparatuses use a slow and gradual movement of the platform such to detach the cured resin without being damaged.

3D printing processes have developed over time and are used not only to produce prototypes, but also to produce finished parts of immediate use. There are many application fields and some of them for example are related to the manufacturing of prosthesis details or surgical instruments that therefore need high characteristics as regards product contamination.

Even other application fields can require high cleaning standards or protection against environmental contaminations that can be both of chemical biological type and related to contamination deriving from materials such as dusts or other contaminants.

Due to the relative slowness of the process and due to the composition of the material, as well as due to its adhesiveness characteristic, the environmental contamination is very probable during the production process.

In addition to the contamination of resin and of the produced object by physical and/or chemical agents present in the environment also the opposite effect has not to be neglected, that is the contamination of the environment by the resin and by the polymerization process. The resin often does not smell nice and moreover substances volatilizing during the process certainly contribute towards the dispersion in the environment and contaminate it. Considering that the 3D printing technology more and more takes a connotation of product manufacturing technology and it is not limited to manufacturing prototypes, the environmental burden that such technologies can take very shortly may become important from a quantitative perspective.
. WO2016/012389 teaches of a system for forming one or a plurality of dimensionally stable objects by selective section-by-section solidification of a dimensionally unstable mass. The system includes a main body which is arranged so as to be stationary, a trough configured for connection to the main body to receive the mass, one or a plurality of controllable radiation source(s) to emit radiation which is suitable to solidify the mass, a base body on which the object to be formed may be constructed, a holding device to receive or hold the base body, a housing which surrounds at least the trough and the radiation source, and a moving device connected or coupled to the main body and the holding device. The moving device includes a drive, so that the holding device is capable of movement relative to the main body by activating the drive. In this document, amongst other aspects, the build material such as the resin is confined in a chamber with non-moving walls and the objects are built outside of this cartridge.

The present invention aims at obtaining an apparatus for producing objects by stereolithography and a method for producing objects by stereolithography that can overcome problems of known apparatuses while making more easy, safe and cheap the manufacturing of products by stereolithography exhibiting a high cleaning level as regards environmental contaminants.

A further object of the invention is to make it possible to protect the object produced by stereolithography both during the production phase and also after said phase with the product in the finished condition.

Still another object is to allow the product produced by stereolithography to be protected also in the following storage phase.

Still another object is to allow the produced object to be protected from the environment, starting from the production process till the first use without interrupting or compromising the protection condition in any manner during said period till the first use.

Still another object is to guarantee in parallel with the protection of the resin and/or of the product from the environment also a protection of the environment against a chemical contamination both as regards aspects generating smells and as regards real environmental contamination chemical mechanisms.

The invention achieves the above objects by a stereolithography apparatus comprising
a container for resin intended to be solidified by a polymerization process
which container comprises two opposite walls movable in a direction approaching them and moving them away from each other, substantially in a manner parallel to each other or along a path whose axis is transverse to the surface of at least one of said two walls;
a first wall being transparent to the direction of propagation of an electromagnetic radiation by means of which said resin is radiated;
a second wall being composed of a movable adhesion platform placed in contact with the resin,
a motorized mechanism progressively moving the movable platform away from the first wall with a stepless motion or by advancement steps;
an electromagnetic radiation source that generates an electromagnetic radiation beam with a predetermined distribution of the intensity of the radiation variable in a plane parallel to said first wall;
a modulator for the intensity of the electromagnetic radiation that changes the distribution of the intensity thereof along the plane parallel to said first wall in a manner synchronized with the advancement of the movable platform and in a manner corresponding to the cross-section shape of an object to be produced, along a section plane of the object which section plane is parallel to said first wall and intersects the object to be produced in a position along the axis thereof parallel to the direction moving the movable platform away from said first wall which position corresponds to the distance between said first wall and said movable platform
and wherein said first wall and said second wall acting as the movable platform are connected with each other along the whole perimetral edge by a shell wall made as extensible in the direction moving said two walls with respect to each other, while said first wall, said second movable wall and said shell wall form a chamber progressively adaptable to the shape of the object to be produced and sealed towards the external environment. The shell wall and the first wall form a vat sealed on all the sides, with a predetermined extension in the direction of the central axis of the shell wall and with an open side opposite to said first wall, while said second movable wall is provided so as to sealingly slide inside said shell wall from the closest position to the farthest position, said first wall and/or said shell wall have an inlet supplying the resin connected to a tank for said resin and the vat and the second movable wall are made as cartridges or as elements detachable from and attachable to the apparatus.

Different embodiments can be provided alternatively with one another.

According to a first embodiment, the chamber formed by said first wall, the shell wall and the movable wall is made according to a cylinder/piston system.

The term cylinder/piston does not mean only circular shaped elements, but also elements with polygonal or irregular shape.

The movement of the second movable wall occurs by motorized means that move it along an axis parallel to the axis of the shell wall.

The first wall and the movable wall are preferably oriented horizontally.

Generally the first wall is the lower one and is fixed, while the second wall vertically overlaps said first wall and it is the only movable wall, however it is possible to provide different solutions wherein both the walls and/or only the first lower wall is movable.

According to a possible variant embodiment, the resin can be supplied from the tank by the suction exerted by the displacement of the second movable wall along the shell wall and/or by means of active supplying means, such as for example pumps or the like, by means of which the resin is taken from the tank and is pushed under controlled pressure in the vat delimited by the first wall and by the shell wall.

In this first variant embodiment the vat and the second movable wall are firmly fastened to supports and are part of the apparatus each object being produced inside the same vat and by means of the same movable wall. The environmental protection occurs only during the production process and however, in order to remove the finished object, the second movable wall has to be completely removed from the vat and therefore the inner compartment of the vat and the movable wall are freely in contact with the environment.

With reference to such variant, each vat and movable wall assembly can be provided with an inlet for the resin connectable in a separable manner to a duct supplying the resin from a resin tank associated in a stable manner or replaceable manner to the apparatus for producing objects by stereolithography.

Advantageously the vat and movable wall assembly is provided with a tap for tightly sealing said inlet.

As an alternative to the above variant on the contrary it is possible to provide a vat and movable wall assembly removable from the apparatus and containing therein or in a chamber adjacent and in communication with the vat a predetermined amount of resin, said amount of resin being proportioned to the one necessary to produce an object with a predetermined structure and a predetermined size.

An improvement that can be provided when the resin is housed in a chamber associated to the vat - movable wall unit is the fact of providing a communication port provided with an opening and closing valve.

Said chamber housing the resin can be composed of an extension or appendage of the vat that is mechanically fastened to the vat wall for example to the shell wall and that communicates with the inside of the vat by a passage opening that can be closed by a valve or the like.

Still according to a characteristic said vat and movable wall assembly can be made as a cylinder piston assembly, that is with a circular symmetry with respect to the axis parallel to the movement direction of the movable wall.

Advantageously said variants that provide the vat - movable wall assembly allow the chamber containing the resin and wherein the object is produced to be never open and never put in communication with the environment except at the moment when the finished object has to be removed and used.

Two alternative variants are possible:
A disposable variant where the chamber becomes also the packaging of the object, therefore said vat-movable wall assembly is a disposable assembly and can be used only once for producing only one object or group of objects at a time;
A reusable variant at least one of the walls of the vat or the movable wall being made or provided with a sealable opening to take out the object or group of objects produced inside thereof.

Also in this latter case it is possible to use the vat-movable wall assembly as the container for the finished object till its use, but such container is recyclable, rechargeable with resin and reusable for producing additional objects.

Therefore in this case the chamber where the stereolithography process occurs becomes at the end of the process a container for the finished object and the condition of isolation from the external environment for protecting the environment and/or vice versa the object in the production phase and in the finished condition is guaranteed without interruption from before the production step, during it and till the use of the produced object.

Said two possibilities are applicable to any of the variants described below.

As an alternative to the solution composed of a vat-movable wall assembly, that is a realization of the cylinder piston type, the chamber containing firstly the resin and then the produced object can be provided with a shell wall made of flexible material and/or can be extensible in a manner corresponding to the progressive distance between the first wall and the second wall.

In all the described variants that provide a chamber housing the resin before, during the production step and later in the condition of finished product, the expansibility of the shell wall, that is the elongation thereof in the relative displacement direction of the first wall and of the movable wall is such to maintain the sealed condition both in the closest condition and in the farthest condition of said bottom wall with respect to said platform.

The extensible shell wall can be made in several manners for example by one of the following examples:
- a sheet of flexible material connecting together the perimetral edges of the bottom wall and of the movable platform like a flexible sleeve, there being provided a length of the flexible wall corresponding substantially to the maximum distance provided between the two opposite walls or higher than it by a predetermined length;
- a shell wall shaped like an extensible bellows;
- a shell wall composed of an extensible material;
- a wall composed of portions engaged with one another telescopically in a sliding and sealing manner;
- combinations of such solutions for at least a part of the total length of said shell wall in the relative displacement direction of the two opposite first and second movable walls.

In the case of the first variant of the flexible wall in the closest condition of the first wall to the second wall the shell wall is arranged by distributing the length in one or more radial enlargement loops, while it progressively extends along the direction of displacement of the movable wall as it progressively moves with respect to the first wall.

The advantage of such solution is the fact that there is no change in volume of the chamber delimited by the assembly of the first wall, second wall and shell wall.

In the further variants and possibly embodiments providing a vat and movable wall assembly it is possible to provide:
A system compensating the inner pressure drop due to the increase in the volume when the movable wall and the opposite wall move away with respect to each other. One embodiment provides such means to be composed of a combination of compensating valve with a purification filter, which valve is controlled to be opened on the basis of a pressure difference between pressure outside the containment chamber, delimited by the two opposite first and second walls and by the shell wall and the pressure inside said containment chamber, for maintaining said external pressure and said inner pressure as balanced, that is to prevent a pressure drop from being generated inside said containment chamber.

According to a variant embodiment it is possible to provide a compensation plenum chamber communicating with the containment chamber, delimited by the two opposite walls and by the shell wall, which compensation plenum chamber houses an amount of gas intended to progressively compensate for the pressure drop generated by the increase in volume due to the two opposite walls moving away with respect to each other.

Advantageously such plenum chamber is provided in the form of a compartment associated to at least a part of the shell wall in the form of an extension or appendage directly fastened or integrated in the shell wall or to one of the other walls or in the form of an element physically separated and connected by a communication duct to the shell wall and/or to one of the two opposite walls.

One embodiment provides at least a part of the shell wall to be composed in the form of a bladder or tubular part sealed and provided with a valve supplying a gas housed therein, which valve is controlled so as to be opened by the pressure difference between the pressure in the containment chamber delimited by the bottom wall, the platform and the shell wall and the pressure of the compensation gas provided in the bladder or tubular compartment composed of the shell wall.

As regards the removable fastening means of the different embodiment variants described above, these are composed of a stationary support for the first lower wall and of a vertically movable support for the second movable wall.

Fastening means between the first and second wall and the relevant support can be made in any manner and for example in the form of fitting guides provided on said stationary and movable supports and corresponding fitting tabs engaging in said guides in a slidable manner with a movement in a direction substantially parallel to the plane defined by said bottom and/or said movable platform. It is possible to provide means for removable locking in the engaging positions such as pins, tightening screws or snap elements.

Other alternatives provide for example a seat like a slot or hole of a corresponding extension of the bottom wall and/or of the movable platform, which extension is insertable in said seat and fastenable by screw fastening means.

For example one alternative provides magnetic or electromagnetic means for mutually fastening the bottom of the vat and the movable platform to the corresponding support of the 3D printer or of the stereolithography apparatus.

From the above it is easy to understand how the solution according to the present invention converts the 3D printing process in a process that maintains isolated from the external environment the resin at least during the production phase of the object limiting at the greatest extent the exposure of the resin to the environment such to avoid mutual contaminations.

The variant embodiments that provide the combination of vat and movable wall to be made in the form of a chamber sealed towards the outside and as a separate part mountable to the apparatus intended for the production of a single object, each object being produced in a dedicated vat movable wall assembly, have the advantage that the resin and the product are separated from the initial non-formed phase to the finished product phase without interruption in the sealed separation between the production chamber and the environment.

This is possible by configuring constructional parts currently firmly constrained to the apparatus into parts composing a capsule or cartridge removably mountable on the printer and forming the sealed containment enclosure for the resin before the production process, the containment enclosure and partially the members producing the product during the production process and the storage package for the finished product till its first use in the condition protected against chemical and mechanical environmental agents.

The cartridge or capsule completely replaces the conventional vat and movable platform of known apparatuses, making them parts of a separate element that has to be renewed by replacing it with a new element for the production of each object.

Obviously the dimensions and shape of the bottom wall, of the movable platform and of the shell wall change and can be adapted to the shape of the object to be produced. Therefore also the amount of contained resin is variable correspondingly to the finished object.

According to a further characteristic the apparatus further comprises an electronic control unit intended to supervise the operation of means moving the movable platform and to control the light radiation generating source.

Therefore the invention relates also to a cartridge for producing object by stereolithography, which cartridge is composed of a pair of opposite walls having a substantially flat shape and of which at least one is transparent, which walls are connected with each other by a shared shell surface progressively extensible and sealed towards the outside in the relative displacement direction of said two opposite walls with respect to each other and a predetermined amount of resin suitable for stereolithography process being provided or feedable from a tank inside the compartment delimited by said two opposite walls and by said shell wall in a manner sealed towards the outside.

Said walls are provided with extensions coupling with complementary coupling means provided on a stationary support and on an opposite support movable with respect to said stationary support respectively.

There are provided several variants of the shell wall that have been described above and that can be applied also to the cartridge.

According to an advantageous characteristic at least for some of said variants of said cartridge there is provided a system compensating the inner pressure drop of the containment chamber delimited in a sealed manner by said two opposite walls and by said shell wall with respect to the pressure outside said containment chamber.

Such system is made according to one or more of the characteristics described above with reference to the stereolithography apparatus.

The invention relates also to a combination of an apparatus for producing objects by stereolithography which is provided in combination with at least one cartridge of the type described above, particularly with a plurality of cartridges that can be both identical one another and different one another as regards shape, final volume and amount of resin.

The invention relates also to a method for producing objects by stereolithography, which method provides the following steps:
a) placing the resin in the container on the first wall forming the bottom side of said container,
b) placing the movable wall in the closest position to said first wall,
c) powering the electromagnetic radiation source,
d) progressively moving away the movable wall and
e) changing the intensity distribution of the electromagnetic radiation in the plane parallel to said first wall which change of the intensity distribution is synchronized with the change of the distance moving away the second wall from the first wall that corresponds to a change in the position of the section plane of the object to be produced along the axis of said object parallel to the displacement direction of said second wall from said first wall till the distance of said two walls corresponds to the complete extension or is higher than said complete extension of the object to be produced along the axis thereof parallel to the direction moving away said second wall from said first wall.

The process described above is further characterized by the fact that the containment of the resin and the polymerization process occur in a chamber extensible in the direction moving away the first and second walls from each other which chamber is separated in a sealed manner from the external environment at least during the production process, the shell wall of said chamber oriented in the direction moving the first wall and the second wall away from each other being extensible in said direction moving the first wall and the second wall away from each other.

According to a further characteristic the method provides also the containment of the finished product to occur inside said containment chamber, separated in a sealed manner from the external environment.

Still according to a characteristic said method provides the containment of the resin for producing a specific object in the fluid form, before beginning the production process, during the production process and of the finished object obtained at the end of the production process inside the same containment chamber, while maintaining the condition sealed towards the outside during the whole process moving the first and second walls away from each other contemporaneously with the progressive polymerization of individual layers of resin forming the sequence of resin layers to obtain the finished object.

One embodiment provides a method of the type described hereinbefore in combination with a stereolithography apparatus comprising a container for resin intended to be solidified by a polymerization process
which container comprises two opposite walls movable in a direction approaching them and moving them away from each other, substantially in a manner parallel to each other or along a path whose axis is transverse to the surface of at least one of the said two walls;
a first wall being transparent to the propagation direction of an electromagnetic radiation by means of which said resin is radiated;
a second wall being composed of a movable adhesion platform placed in contact with the resin,
a motorized mechanism progressively moving the movable platform away from the first wall with a stepless motion or by advancement steps;
an electromagnetic radiation source that generates an electromagnetic radiation beam with a predetermined distribution of the intensity of the radiation variable in a plane parallel to said first wall;
a modulator for the intensity of the electromagnetic radiation that changes the distribution of the intensity thereof along the plane parallel to said first wall in a manner synchronized with the advancement of the movable platform and in a manner corresponding to the cross-section shape of an object to be produced, along a section plane of the object which section plane is parallel to said first wall and intersects the object to be produced in a position along the axis thereof parallel to the direction moving the movable platform away from said first wall which position corresponds to the distance between said first wall and said movable platform.

Still according to a characteristic the method provides to make the shell wall according to different options described above and for some of the different options it provides the step compensating the pressure drop inside the variable volume compartment caused by the expansion of said volume, by the controlled supply of gas or air subjected to the control of purity and/or decontamination from environmental agents.

The invention relates to further improvements that the subject matter of the subclaims.

Particularly as regards all the described embodiments it is possible to provide a closable port for filling the resin in the vat-movable wall unit in the containment chamber or for taking the residual resin from said vat-movable wall unit or containment chamber.

Still according to a possible embodiment the vat-movable wall unit or the containment chamber, that is the chamber delimited by two opposite walls, bottom and upper walls respectively, connected by a shell wall extensible as described above in more details in one or more embodiments, are provided with one or more inlets openable and closable in a sealed manner for supplying, in any phase of the production process, gas or other substances to modify the drying process and/or the finishing of the object to be produced or to supply fluids for washing the produced object or the inner walls of the containment chamber or of the vat-movable wall unit.

Obviously such characteristics are provided also as method steps that provide separately or in combination:
- supplying one or more fluids in the containment chamber to chemically act on the resin drying process;
- supplying fluids for cleaning the containment chamber and/or the object contained therein.

Still according to a further characteristic of the process, it provides the step of supplying a resin amount in the containment chamber;

Still according to a further characteristic the method provides the steps of taking the unused resin from the containment chamber for reusing it by supplying it in another containment chamber.

The characteristics described above and other characteristics as well as the advantages of the present invention will be more clear from the following description of some embodiments shown in annexed drawings wherein:
Fig.1 is a schematic diagram of the apparatus according to the present invention and particularly of a first embodiment of the cartridge or capsule in the closest condition of the transparent bottom side and of the movable platform before the beginning of the stereolithography process.
Fig.2 is the cartridge of figure 1 in an intermediate condition of the stereolithography process where a part of the resin layers of the sequence of resin layers forming the object to be produced has been cured and the bottom wall and the movable platform are moved away from each other for a given extent corresponding to the number of cured layers.
Fig.3 is the cartridge of the previous figures in the final condition where all the resin layers forming the object to be produced have been cured, the finished object is interposed between the bottom wall and the movable platform that have reached the relative farthest position with reference to the corresponding dimension of the produced object.
Fig.4 is a schematic diagram of an apparatus for producing objects by stereolithography according to prior art.
Figures 5 and 6 schematically are two further embodiments of the present invention.
Figures 7 and 8 are a cartridge acting as a container for the finished object separated from the stereolithography apparatus according to the embodiment of figure 6 and the embodiment of figures 1 to 3 respectively.

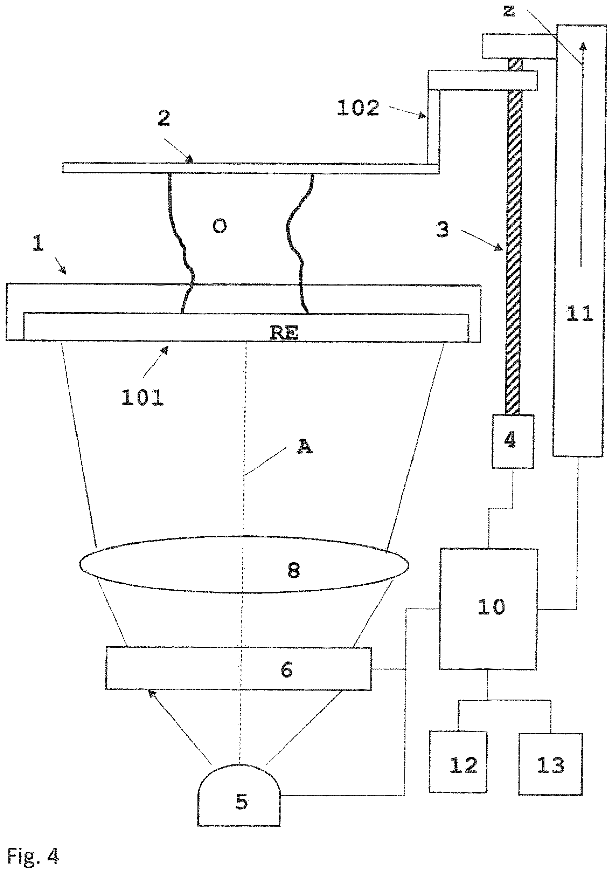

Figure 4 shows a schematic diagram of a stereolithography apparatus according to prior art.

With reference to the following description, the term bottom wall or bottom of the vat refers to the more general term first wall and the term platform or movable platform refers to the more general term second movable wall.

The term light radiation is not limited to the visible spectrum field but it implies any type of electromagnetic radiation able to generate a polymerization of the resin.

The term transparent comprises both transparent for the radiation in the spectrum field of the visible electromagnetic radiation and for the radiation of not visible frequencies.

The apparatus for the production of objects by stereolithography is described below as regards its basic constructional parts, it being known in itself and widespread on the market. Not described data, if any, related to the apparatus are within the basic cultural technical knowledge of the person skilled in the art.

In its basic form the device comprises a vat 1 containing a predetermined amount of resin sufficient for producing the desired object O. The vat has a transparent bottom wall 101. The resin RE is contained therein. In a facing position, namely opposing the bottom side, there is provided a movable platform 2 whose side facing the bottom side is the so called build plane. The movable platform 2 is supported so as to be vertically movable, that is in the direction perpendicular to the extension thereof and of the bottom 101 of the vat 2. Movement means can be of any type and in the figure, merely by way of example, these are composed of a vertically oriented threaded shaft 3. The threaded shaft is operated so as to rotate about its own axis by a motor 4. The movable platform 2 is supported so as to be movable parallel to itself by means of a support bracket 102 provided with a threaded hole engaging the threaded shaft. The support bracket 2 is locked as regards the rotation about the axis of the threaded shaft 3, but it axially slides along it, therefore the rotation of the shaft by the motor 4 causes the platform 2 to vertically translate. Depending on the direction of rotation of the motor 4 the platform 2 is translated away from or close to the bottom 101 of the vat 1.

The surface of the platform 2 facing the bottom 101 of the vat 1 is the surface for adhesion of the resin upon polymerization.

A light source 5 irradiates the resin with a field of electromagnetic energy having a predetermined intensity distribution in the plane corresponding to a section plane or a section layer and to the shape of the object O along said section plane or said slice or layer of the object O and in the direction of the optical axis A. The intensity distribution of the radiation is generated by a transparent screen or the like 6 that has a transmissivity variable in non-uniform manner along its extension and the radiation is focused by an optical assembly 8 on the transparent bottom of the vat 1.

The light radiation modulated as regards the intensity distribution by the section image projected each time and corresponding to a specific section plane or layer within a sequence of section planes or section layers in which the body to be produced is divided and that are side by side along an axis of the body of the object to be produced parallel to the direction moving away the movable platform, produces a polymerization corresponding to said section plane or said resin layer having the thickness corresponding to the layer the image refers to. Images follow one another according to a predetermined sequence order of the layers the body to be produced is divided into.

The process is controlled by a control unit 10 comprising at least one processor and intended to execute a control software that sets up the processor such to give commands thereto in order to perform functions managing and operating the peripheral units composed of the motor 4, of possible control members generally shown as inserted in the column 11, of the light source 5 and of the screen 6 or another device modulating the intensity distribution of the light radiation correspondingly to the shape of the object in the several section planes. A user interface 12 allows operating parameters to be configured, set or allows operating conditions of the apparatus to be displayed. A memory 13 is configured to contain the control program and possible further parameters, such as for example data about digitalized drawings or digitalized images for example by means of 3D CAD drawings of the object, of the several sections that have to be made in sequence and therefore that have to be used to modulate, by the control unit 10 and the screen 6, the light radiation irradiating the resin correspondingly to the sequence of section planes or layers of the object correspondingly to the relative position of the movable wall with respect to the bottom wall of the vat 1.

The production process provides the platform 2 to be placed at an initial distance from the bottom 101 of the vat 1 equal to the thickness of a first layer of resin to be cured.

The light radiation generating source 5 generates a light radiation that irradiates the resin layer comprised between the bottom 101 of the vat 1 and the movable platform 2.

In a process by steps moving away the platform from the bottom wall 101 of the vat 1 the object O is produced by a sequence of slices or layers thereof along predetermined section planes. For each resin layer being cured, a drawing is projected on the resin layer which corresponds to the section of the body under production along said predetermined layer or said predetermined slice of the desired object, such that each resin layer is cured in a manner corresponding to the section image associated thereto.

The resin RE, subjected to radiation, is cured and solidified, creating a layer or slice of the desired object.

In order to produce a following layer, the movable platform 2 is moved away with respect to the bottom 101 of the vat 1, such to detach the layer formed just now from the bottom of the vat 1. The resin layer cured just now is placed at a distance from the bottom 101 of the vat 1 for an extent equal to the thickness of the following layer to be produced and a layer of resin to be cured with a corresponding thickness is placed between the resin layer cured in the immediately preceding step and the bottom 101 of the vat. Therefore the image of the corresponding section slice of the desired object is projected thereon and therefore also such resin layer is cured. The process is repeated till the complete polymerization, layer after layer, of all the slices the object is divided into till completely producing the object O to be created.

The speed with which the platform 2 is moved away can be adjusted according to different criteria, for example, but not as a limitation, on the basis of the amount of resin to be cured for each layer and on the basis of the size of the layer of resin to be cured.

In an alternative process, the process provides a continuous movement of the platform 2 with respect to the bottom wall 101 of the vat. In this case the distance between the bottom wall 101 and the platform 2 corresponds to a predetermined univocal position of a section plane along an axis of the object to be produced parallel to the direction of movement of the movable platform 2.

The section plane moves along said axis in a manner synchronized with the movement of the movable platform with respect to the bottom wall 101 of the vat 1 and the intensity distribution of the light radiation changes correspondingly to the shape of the object along the sequence of the section planes synchronized with the movement of the movable platform 2 and correspondingly to a polymerization of the resin to reproduce the shape of the object in the section plane.

As regards the present invention both the solution by steps and the continuous solution can be applied, as well as the inventive concept can be provided in combination with any variant of the production process and of the relevant apparatus carrying out the process, the invention being substantially intended for the improvement regarding the combination of vat and movable platform, therefore any production process and relevant apparatus for carrying it out requiring two opposite walls 101 and 2 movable with respect to each other according to a direction transverse thereto can be provided in combination with the teaching of the present invention.

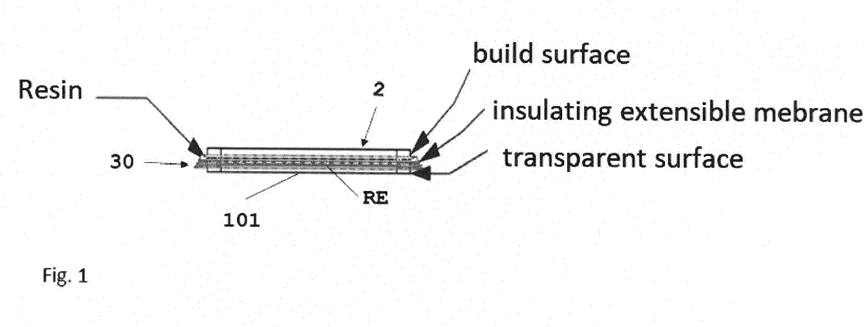

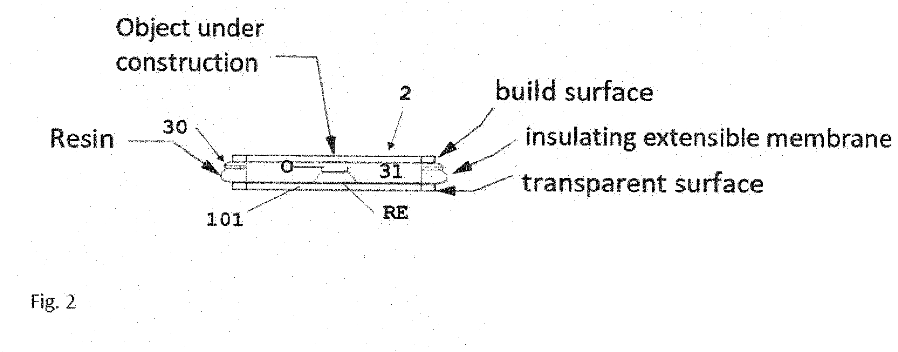

Figures 1 to 3 show three operating conditions of a first embodiment of the apparatus according to the present invention.

Generally the apparatus according to the present invention has a construction substantially similar to the schematic one described with reference to figure 4 and the principle operating manners are the same.

The main difference between the schematic diagram and the present invention, is the fact that the transparent bottom side 101 of the vat 1, the vat 1 and the movable platform 2 are removably mountable to supports of the apparatus and together are a separate part of the apparatus intended to produce only one object, at the end of the production process it becoming an enclosure or container for the finished object.

Specifically the wall acting as the bottom wall 101 of the vat 1 is temporarily removably fastenable to a stationary support that in figure 4 is schematized by the surface 40 provided with an opening 140 for the passage of the polymerization light radiation according to the above mentioned principle manners.

The movable platform 2 forms a wall substantially parallel to the wall 101. This upper wall is removably connectable to the vertical translation means (z axis parallel to the axis of the threaded shaft 3 in figure 4) .

With reference to the example of figure 4 the connection to z-axis movement means may occur by means removably fastening to the bracket 102, such as for example screw or tightening bolt means or a fastening flange that connect the face of the platform opposite to the bottom 101 of the vat 1 with the bracket 102.

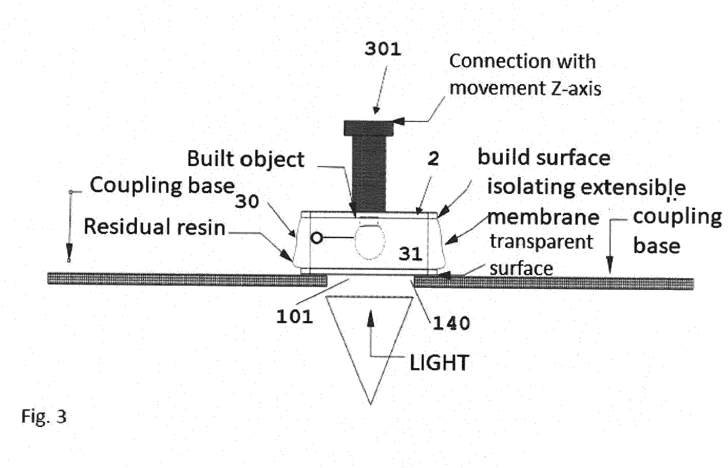

In figure 3 such means are composed of a flanged fastening pin 301. However the removable fastening means both for the side 101 and the platform 2 can be any and the person skilled in the art has available a wide choice among different options present in his/her basic technical knowledge.

As an alternative to mechanical solutions it is also possible to provide electromagnetic or magnetic fastening systems.

A perimetral shell wall 30 connects the edges or perimetral bands of the transparent bottom wall 101 and of the wall acting as the platform 2, forming side walls acting as containing side walls of the vat in conventional apparatuses such as that in figure 4 and delimiting, without interruption, a chamber 31 tightly sealing it towards the outside.

The chamber 31 is delimited by the bottom wall 101 by the wall overlapping the bottom wall forming the movable platform 2 and by the shell wall 30. Such assembly of walls forms a cartridge or capsule that is more generally a removable container completely sealed towards the outside and where at the beginning a predetermined amount of resin, not cured yet, is contained.

In this embodiment the shell wall 30 is extensible or it can be extended in a direction parallel to the direction moving away the two walls 101 and 2 with respect to each other.

The solution shown in figures provides a membrane of flexible material like a sleeve whose axial extension corresponds to the farthest position of the two walls 101 and 2 with respect to each other or slightly higher than that. In this embodiment, the volume enclosed in the chamber delimited by the two walls 101, 2 and by the shell wall 30 has a constant volume, since the membrane forming the shell wall is arranged with a radial bowing orientation with respect to the axis of the sleeve shape.

As the bottom wall 101 and the movable wall 2 moves away from each other, the flexible membrane extends in the direction moving away the two walls recovering the extension length from the richness of the radial or side bowing.

Depending on needs the membrane can be selected as a barrier to particles with a predetermined grain size or as a barrier to specific gases or as a barrier to particles and barrier to gases. Particles mean not only particles of inanimate material but also exponents of bacterial flora and fauna or the like.

Figures 1 to 3 show a sequence of the production process.

At the first step, a cartridge comprising a wall acting as movable platform 2, an opposite wall acting as transparent bottom 101 and a perimetral extensible shell wall 30 is mounted in a polymerization printing apparatus 3 by fastening the bottom 101 to the stationary support 40 and the platform 2 to the bracket 102 respectively.

The stationary support and the bracket 102 are in the closest position therefore the cartridge composed of the wall acting as movable platform 2, of the opposite wall acting as transparent bottom 101 and of the perimetral extensible shell wall 30 has the two walls forming the bottom side 101 and the platform 2 in the closest position. The sealed chamber 31 contains an amount of resin proportioned to the production of the desired object O.

The process begins and the movable platform 2 is vertically dragged in the z axis direction by the bracket 102 with reference to the example of the apparatus of figure 4.

As the process continues the movable platform 2 is moved to the highest distance from the bottom 101 coinciding with all the layers forming the complete object O being cured.

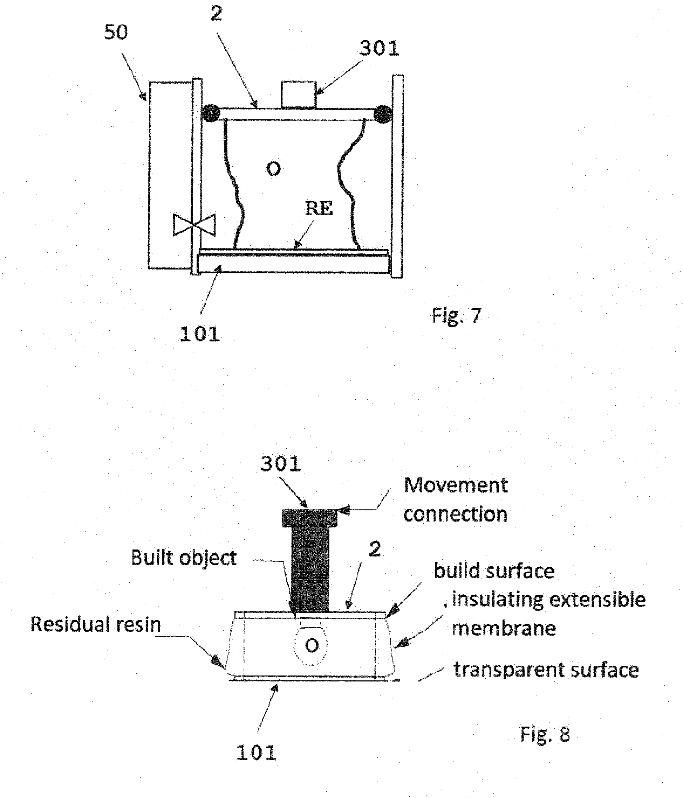

The membrane forming the shell wall 30 in the form of the flexible sleeve reaches its maximum extension, while it remains constrained without interruption to the bottom 101 and to the platform 2 while maintaining the chamber 31 in the sealed condition towards the outside. The chamber 31 now has become a sealed container for the produced object O and where the object can be kept and stored till its first use. Such container can be removed from supports 102 and 40 of the apparatus and is a unit element with the produced object contained therein as shown in figure 8.

In an alternative embodiment, the shell wall 30 is for example composed of an extensible membrane.

Further different alternative solutions are possible such as for example a shell wall in the form of a bellows with a wall having a zigzag cross section shape, or the like, a wall composed of at least two portions that are slidably telescopically mounted in a sealing manner with respect to each other.

Combinations of these embodiments are also possible, meaning that some portions of the extensible shell wall are made according to one embodiment and others according to another embodiment among the described ones said portions following each other according to the extension direction of the shell wall 30.

Advantageously according to one embodiment, at least in some embodiments it is possible to provide a system compensating the pressure drop generated in the chamber 31 due to the increase in the volume thereof.

Several alternatives can be possible such as for example a compensating valve that opens on the basis of the difference of pressure inside the chamber with respect to the one present outside the chamber and which valve can be coupled to a filtering system or to a tank for compensation gas having a controlled purity.

As an alternative the chamber 31 can be associated to compensating plenum chamber for example in the form of a bladder or a tubular part of the shell wall 30 that is filled beforehand with a gas with such an amount enough to compensate for the pressure drop generated by the increase in volume of the chamber 31 during the production process and which bladder or tubular part is in communication with the inside of the chamber through a valve that opens as a function of the pressure difference between the pressure present in the chamber 31 and that present in the bladder or tubular part of the shell wall 30.

From the above it is clear the very simplicity of the suggested solution and the easiness in modifying the structure of currently existing apparatuses such to integrate the inventive teaching of the present invention.

Essentially changes are about the fact of providing means removably fastening the walls of the cartridge forming the transparent bottom and the movable platform.

The cartridge in itself does not exhibit a complicated construction both as regards construction parts and as regards their assembling, and it does not require expensive materials or materials difficult to be found. The advantage is a constant and continuous protection against contamination effects, due to the contact with the external environment, that begin before the production process, namely at the moment when the resin to be cured is supplied and these effects end only upon the first use of the finished product.

A suitable construction of the extensible shell wall also in the form of several layers, each one dedicated to a specific barrier effect against specific and different contaminants, allows the protection against contaminations from agents present in the environment to be calibrated according to specific needs of the applications to which the produced object is intended thus avoiding excessive protection costs to be provided when it is not necessary.

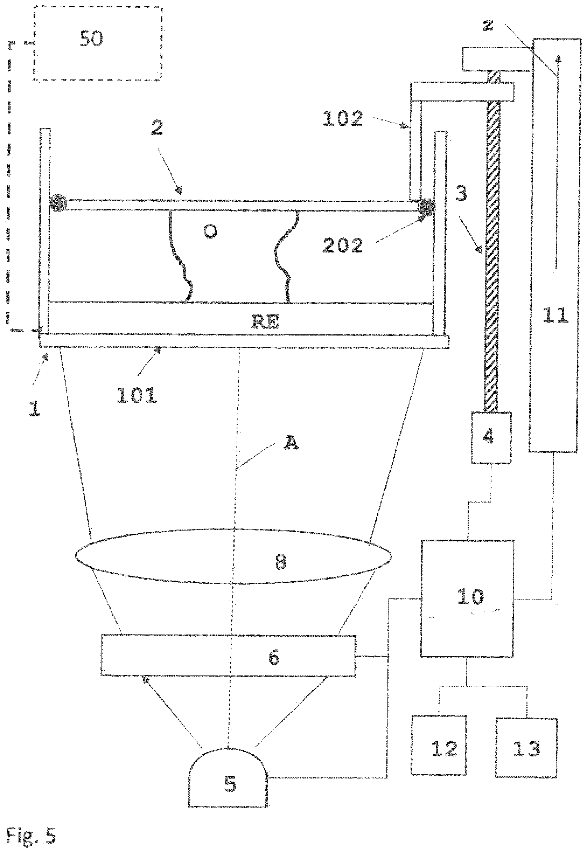

Figure 5 shows a further variant embodiment.

It is a variant to the conventional arrangement of a stereolithography apparatus according to the example of figure 4.

In the case of figure 5, the combination of vat 1, bottom wall 101, movable platform 2 is made as a cylinder piston unit, preferably but not necessarily with a cylindrical cross-section.

The wall 101 and the side wall of the vat 1 form the cylinder part wherein the movable platform 2 sealingly slides in the direction of the axis of the side wall of the vat 1 as schematically shown by the peripheral gasket 202 associated to the platform 2.

The cylindrical vat 1 and the movable wall 2 acting as a piston are firmly connected to the supports of the apparatus and in order to remove the workpiece it is necessary to completely remove the movable platform 2 from the vat 1 by opening the inner compartment to the outside.

A variant provides such action to be carried out also to supply the amount of resin necessary to produce the desired object.

A variant shown by dashed lines on the contrary shows a resin tank 50 connected to an inlet of the vat 1. Therefore the resin is only drawn by the suction generated by moving the movable platform 2 as a syringe or it is possible also to provide a pump or the like for the controlled supply of the resin that often is relatively viscous.

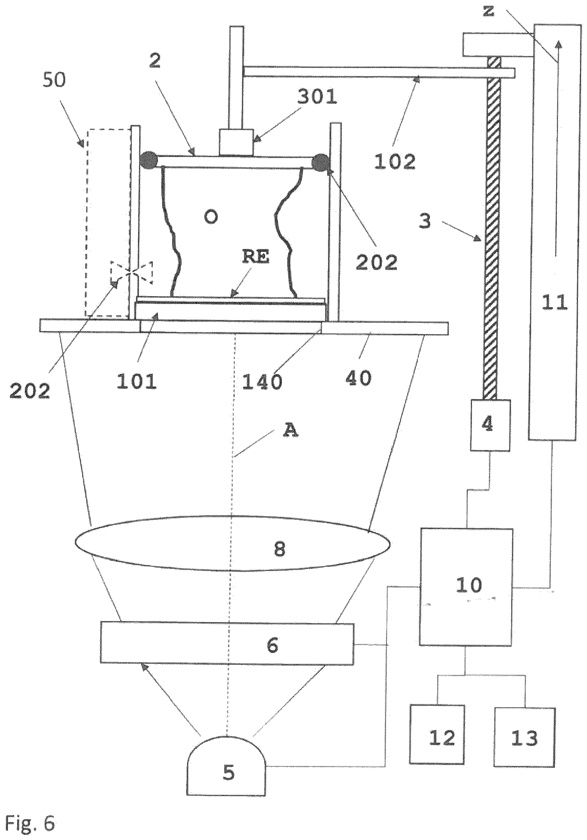

Figure 6 shows a further variant embodiment of the embodiment according to figure 5.

In this case the wall 101, the side wall of the vat 1 and the movable platform 2 form, like figure 5, a cylinder piston unit preferably with a cylindrical section however the walls 101 and 2 can be removed from the supports of the apparatus.

As it is clear the platform 2 is shown fastenable in a removable manner to the bracket 102 by means of a joint or removable fastening fitting that can be made in any manner as already described with reference to the example of figures 1 to 3. At the same manner the wall 101 that forms the bottom of the vat is removably fastened to the corresponding support 40 for example as that described in figures 1 to 3.

The resin can be housed in the vat 1 or the resin can be housed in a tank 50 and progressively fed in the vat 1 through a communication aperture openable and closable by means of removable closure means such as for example the valve 302.

With reference to the embodiments of figure 5 and 6 it is clear that in the first one the containment chamber can act as a container for the finished object and can be used for producing a plurality of objects, while in the second embodiment of figure 6 the cylinder piston assembly remains constrained to the finished product and can be used only for producing such product.

Still according to an improvement applied to all the different embodiments, when the cylinder/piston unit or the cartridge 6 is associated to a separate tank as in figure 5 or an integrate tank as in figure 6 it is possible to provide also a plurality of tanks or pockets for different gases or chemical substances that can have specific functions in the production process.

## Claims

1. Stereolithography apparatus comprising
a container for resin intended to be solidified by a polymerization process
which container comprises two opposite walls (101;2) movable in a direction approaching them and moving them away from each other, substantially in a manner parallel to each other or along a path whose axis is transverse to the surface of at least one of the said two walls;
a first wall (101)being transparent to the direction of propagation of an electromagnetic radiation by means of which said resin is radiated;
a second wall being composed of a movable adhesion platform (2) placed in contact with the resin,
a motorized mechanism progressively moving the movable platform (2) away from the first wall (101) with a stepless motion or by advancement steps;
an electromagnetic radiation source (5) that generates an electromagnetic radiation beam with a predetermined distribution of the intensity of the radiation variable in a plane parallel to said first wall (101) ;
a modulator for the intensity of the electromagnetic radiation that changes the distribution of the intensity thereof along the plane parallel to said first wall (101) in a manner synchronized with the advancement of the movable platform (2) and in a manner corresponding to the cross-section shape of an object (O) to be produced, along a section plane of the object which section plane is parallel to said first wall (101) and intersects the object to be produced in a position along the axis thereof parallel to the direction moving the movable platform (2) away from said first wall (101) which position corresponds to the distance between said first wall and said movable platform
and wherein said first wall (101) and said second wall acting as the movable platform (2) are connected with each other along the whole perimetral edge by a shell wall (30) made as extensible in the direction moving said two walls with respect to each other, while said first wall (101), said second movable wall (2) and said shell wall (30) form a chamber (31) progressively adaptable to the shape of the object to be produced and sealed towards the external environment and
a vat (1) being provided which is delimited by the first wall (101) and a shell wall and
wherein the vat (1) and the second movable wall (2) are made as cartridges or elements detachable from and attachable to the apparatus.

2. Apparatus according to claim 1, wherein the chamber (31) composed of said first wall (101), the shell wall (30) and the movable wall (2) is made according to a piston/plunger system principle.

3. Apparatus according to claim 1 or 2 wherein the resin can be fed from the tank (50) by the suction exerted by the movement of the second movable wall (2) along the shell wall (30) and/or by active supplying means, such as for example pumps or the like, by means of which the resin is taken from the tank and pushed under controlled pressure in the vat (1) delimited by the first wall (101) and the shell wall (2).

4. Apparatus according to one or more of the preceding claims, wherein the vat (1) and the second movable wall (2) are firmly fastened to supports (40; 102) and are part of the apparatus each object being produced inside the same vat and by the same movable wall.

5. Apparatus according to claim 1, **characterized in that** the extensible shell wall (30) is made according to at least one or according to a combination of the following modes:
- a sheet or a membrane of extensible material that connect the perimetral edges of the bottom wall (101) and of the movable platform (2) with each other;
- a shell wall (30) shaped like a bellows;
- a wall composed of portions telescopically engaged with each other in a slidable and sealed manner;
- combinations of such solutions for at least a part of the overall length of said shell wall in the direction of relative displacement of the bottom wall and of the platform.

6. Apparatus according to one or more of the preceding claims, **characterized in that** for the sealed containment chamber (31) there is provided a system compensating for the pressure drop inside said chamber and due to the increase in volume upon moving away the movable platform (2) and the bottom wall (101) with respect to each other.

7. Apparatus according to one or more of the preceding claims, **characterized in that** the chamber (31) is provided with an inlet for the resin connectable in a separable manner to a duct feeding the resin from a resin tank (50) which is firmly associated to or it being also replaceable to the apparatus for producing objects by stereolithography or which is made as a fixed or removable appendage of one of the walls delimiting said chamber (31) and communicating with said chamber in an openable and closable manner.

8. Apparatus according to one or more of the preceding claims, wherein the chamber (31) has an outlet for drawing the residual resin in combination with means for drawing the residual resin and means for storing the drawn residual resin.

9. Apparatus according to one or more of the preceding claims, wherein said chamber (31) is reusable for producing several objects it being provided with an openable and closable aperture for taking out the finished object and/or for feeding new resin.

10. Apparatus according to one or more of the preceding claims, wherein said chamber has one or more inlets for feeding one or more substances affecting the drying process and/or for feeding fluids for cleaning the chamber and/or the object and/or for feeding the resin.

11. Cartridge for producing objects by stereolithography process realized by stereolithograpy apparatus according to one or more of the preceding claims, which cartridge is composed of a pair of opposite walls (101, 2) having a substantially flat shape and at least one of them being transparent, which walls are connected with each other by a shared shell surface (30) which is progressively extensible and sealed towards the outside, in the relative displacement direction of said two opposite walls (101, 2) and a predetermined amount of resin intended for stereolithography process being provided or feedable from a tank inside the containment chamber delimited in a sealed manner towards the environment by said two opposite walls and by said shell wall.

12. Cartridge according to claim 11 wherein said walls are provided with extensions connecting to complementary coupling means provided on a stationary support and on an opposite support movable with respect to said stationary support respectively.

13. Cartridge according to claims 11 or 12 **characterized in that** it has the characteristics according to one or more of the claims 1 to 11.

14. Combination of an apparatus for producing stereolithography objects according to one or more of the claims 1 to 10 with at least one cartridge according to one or more of the claims 11 to 13 or with a plurality of cartridges both identical with each other and different from each other as regards shape, final volume and amount of resin.

15. Method for producing stereolithography objects with an apparatus according to one or more of claims 1 to 10 and at least one cartridge according to one or more of claims 11 to 13 , which method provides the following steps:
a) placing the resin in the container on the first wall (101) forming the bottom side of said container,
b) placing the movable wall (2) in the closest position to said first wall,
c) powering the electromagnetic radiation source (5),
d) progressively moving away the movable wall (2) and
e) changing the distribution of the intensity of the electromagnetic radiation in the plane parallel to said first wall which change of the distribution of the intensity is synchronized with the change of the distance moving the second wall away from the first wall corresponding to a change in the position of the section plane of the object to be produced along the axis of said object (O) parallel to the direction displacing said second wall from said first wall till the distance of said two walls corresponds to the complete extension or is higher than said complete extension of the object to be produced along the axis thereof parallel to the direction moving said second wall away from said first wall, the process above is further **characterized in that** the resin containment and the polymerization process take place in a housing chamber (31) with a volume extensible in the direction moving the first wall and the second wall away from each other which chamber is separated in a sealed manner from the external environment at least during the production process the shell wall of said chamber oriented in the direction moving the first wall and the second wall away from each other being extensible in said direction moving the first wall and the second wall away from each other.

16. Method according to claim 15 **characterized in that** it provides also the containment of the finished product to occur inside said containment chamber, separated in a sealed manner from the external environment.

17. Method according to claim 15 or 16, **characterized in that** it provides the resin for producing a predetermined object to be contained in fluid form, before starting the production process, during the production process and the finished object obtained at the end of the production process to be contained inside the same variable volume housing space, while maintaining the condition sealed towards the external environment during the whole process of moving the first wall and the second wall away from each other contemporaneously with the progressive polymerization of individual resin layers that forms the sequence of resin layers to obtain the finished object.

18. Method according to one or more of the preceding claims 15 to 17 in combination with a stereolithography apparatus comprising
a container for resin intended to be solidified by a polymerization process
which container comprises two opposite walls movable in a direction approaching them and moving them away from each other, substantially in a manner parallel to each other or along a path whose axis is transverse to the surface of at least one of the said two walls;
a first wall being transparent to the direction of propagation direction of an electromagnetic radiation with which said resin is radiated;
a second wall being composed of a movable adhesion platform placed in contact with the resin,
a motorized mechanism progressively moving the movable platform away from the first wall with a stepless motion or by advancement steps;
an electromagnetic radiation source that generates an electromagnetic radiation beam with a predetermined distribution of the intensity of the radiation variable in a plane parallel to said first wall;
a modulator for the intensity of the electromagnetic radiation that changes the distribution of the intensity thereof along the plane parallel to said first wall in a manner synchronized with the advancement of the movable platform and in a manner corresponding to the cross-section shape of an object to be produced, along a section plane of the object which section plane is parallel to said first wall and intersects the object to be produced in a position along the axis thereof parallel to the direction moving the movable platform away from said first wall which position corresponds to the distance between said first wall and said movable platform.

19. Method according to one or more of the claims 15 to 18 **characterized in that** it provides to compensate for the pressure drop inside the variable volume housing caused by the expansion of said volume, by the controlled supply of gas or air subjected to the control of purity and/or decontamination from environmental agents.

20. Method according to one or more of the preceding claims 15 to 19, **characterized in that** it provides to feed resin amounts or to take resin residues not used and to store or load said residues in a new cartridge or chamber.

21. Method according to one or more of the preceding claims 15 to 20 , wherein there is provided to supply gases that act on the drying process or inert gases or fluids washing the chamber and/or the produced object.

## Patentansprüche

1. Stereolithographievorrichtung umfassend
einen Behälter für ein durch ein Polymerisationsverfahren zu verfestigendes Harz,
wobei der Behälter zwei gegenüberliegende Wände (101; 2) aufweist, die in einer gegenseitigen Annäherungs- und Entfernungsrichtung im Wesentlichen parallel zueinander oder entlang einer Bahn beweglich sind, deren Achse quer zur Oberfläche von mindestens einer der beiden Wände ist;
eine erste Wand (101), die in Ausbreitungsrichtung einer elektromagnetischen Strahlung durchlässig ist, durch die das Harz bestrahlt wird;
eine zweite Wand, die aus einer mit dem Harz in Kontakt stehenden beweglichen Haftplattform (2) besteht,
einen motorisierten Mechanismus, der die bewegliche Plattform (2) fortschreitend von der ersten Wand (101) durch eine stufenlose Bewegung oder durch Vorwärtsschritte wegbewegt;
eine elektromagnetische Strahlungsquelle (5), die einen elektromagnetischen Strahl mit einer vorgegebenen, in einer Ebene parallel zur ersten Wand (101) variablen Strahlungsintensitätsverteilung erzeugt;
einen Modulator für die Intensität der elektromagnetischen Strahlung, der deren Intensitätsverteilung entlang der zur ersten Wand (101) parallelen Ebene in einer mit der Vorwärtsbewegung der beweglichen Plattform (2) synchronisierten Weise und entsprechend der Querschnittsform eines herzustellenden Gegenstandes (O) entlang einer Schnittebene des Gegenstandes ändert, wobei die Schnittebene parallel zu der ersten Wand (101) ist und den herzustellenden Gegenstand in einer Position entlang dessen Achse schneidet, die parallel zu der Richtung ist, in der sich die bewegliche Plattform (2) von der ersten Wand (101) weg bewegt, welche Position dem Abstand zwischen der ersten Wand und der beweglichen Plattform entspricht
und wobei die erste Wand (101) und die zweite als bewegliche Plattform (2) wirkende Wand entlang des gesamten Umfangsrandes durch eine in der reziporken Bewegungsrichtung der beiden Wände dehnbare Mantelwand (30) miteinander verbunden sind, wobei die erste Wand (101), die zweite bewegliche Wand (2) und die Mantelwand (30) eine Kammer (31) bilden, die sich fortlaufend an die Form des herzustellenden Gegenstandes anpasst und gegenüber der äußeren Umgebung abgedichtet ist, und
wobei eine Wanne (1) vorgesehen ist, die durch die erste Wand (101) und eine Mantelwand begrenzt ist und
wobei die Wanne (1) und die zweite bewegliche Wand (2) als Kartuschen oder Elemente ausgebildet sind, die von der Vorrichtung abnehmbar und an dieser anbringbar sind.

2. Vorrichtung nach Anspruch 1, wobei die aus der ersten Wand (101), der Mantelwand (30) und der beweglichen Wand (2) bestehende Kammer (31) nach dem Prinzip eines Kolben/Plunger-Systems hergestellt ist.

3. Vorrichtung nach Anspruch 1 oder 2, bei der das Harz aus dem Vorratsbehälter (50) durch die von der Bewegung der zweiten beweglichen Wand (2) entlang der Mantelwand (30) ausgeübte Saugwirkung und/oder durch aktive Zuführmittel, wie z.B. Pumpen oder dergleichen, einspeisbar ist, durch die das Harz aus dem Vorratsbehälter entnommen und unter kontrolliertem Druck in die von der ersten Wand (101) und der Mantelwand (2) begrenzte Wanne (1) eingeschoben wird.

4. Vorrichtung nach einem oder mehreren der vorhergehenden Ansprüche, wobei die Wanne (1) und die zweite bewegliche Wand (2) fest an Trägern (40; 102) befestigt sind und Teil der Vorrichtung sind, wobei jeder Gegenstand in derselben Wanne und durch dieselbe bewegliche Wand hergestellt wird.

5. Vorrichtung nach Anspruch 1, **dadurch gekennzeichnet, dass** die dehnbare Mantelwand (30) nach mindestens einer oder nach einer Kombination der folgenden Modalitäten hergestellt wird:
- eine Folie oder eine Membran aus dehnbarem Material, die die Umfangsränder der Bodenwand (101) und der beweglichen Plattform (2) miteinander verbindet;
- eine Mantelwand (30), die faltenbalgartig geformt ist;
- eine Wand, die aus teleskopartig ineinander verschiebbaren und abgedichteten Abschnitten besteht;
- Kombinationen solcher Lösungen für mindestens einen Teil der Gesamtlänge der Mantelwand in der Richtung der Relativbewegung der Bodenwand und der Plattform.

6. Vorrichtung nach einem oder mehreren der vorhergehenden Ansprüche, **dadurch gekennzeichnet, dass** für die abgedichtete Aufnahmekammer (31) ein System vorgesehen ist, das den durch die Volumenzunahme beim gegenseitigen Auseinanderfahren der beweglichen Plattform (2) und der Bodenwand (101) bedingten Druckabfall innerhalb der Kammer ausgleicht.

7. Vorrichtung nach einem oder mehreren der vorhergehenden Ansprüche, **dadurch gekennzeichnet, dass** die Kammer (31) mit einem Harzeinlaß versehen ist, der lösbar mit einer Leitung verbindbar ist, die das Harz aus einem Harzbehälter (50) zuführt, der fest oder auch austauschbar mit der Vorrichtung zur Herstellung von Gegenständen durch Stereolithographie verbunden ist oder der als fester oder abnehmbarer Ansatz einer der die Kammer (31) begrenzenden Wände ausgebildet ist und mit der Kammer in einer öffenbaren und schließbaren Weise in Verbindung steht.

8. Vorrichtung nach einem oder mehreren der vorhergehenden Ansprüche, wobei die Kammer (31) einen Auslass zum Entnehmen des Restharzes in Kombination mit Mitteln zum Entnehmen des Restharzes und Mitteln zum Speichern des entnommenen Restharzes aufweist.

9. Vorrichtung nach einem oder mehreren der vorhergehenden Ansprüche, wobei die Kammer (31) zur Herstellung von mehreren Gegenständen wiederverwendbar ist, wobei diese eine öffenbare und verschließbare Öffnung zur Entnahme des fertigen Gegenstandes und/oder zur Zuführung von neuem Harz aufweist.

10. Vorrichtung nach einem oder mehreren der vorhergehenden Ansprüche, wobei die Kammer einen oder mehrere Einlässe zum Zuführen einer oder mehrerer den Trocknungsprozess beeinflussender Substanzen und/oder zum Zuführen von Reinigungsfluiden für die Kammer und/oder den Gegenstand und/oder zum Zuführen des Harzes aufweist.

11. Kartusche zur Herstellung von Gegenständen durch ein Stereolithographieverfahren, das mittels einer Stereolithographievorrichtung nach einem oder mehreren der vorhergehenden Ansprüche realisiert wird, wobei die Kartusche aus einem Paar von gegenüberliegenden, eine im Wesentlichen flache Form aufweisenden Wänden (101, 2) besteht, von denen mindestens eine durchlässig ist, wobei die Wände miteinander durch eine gemeinsame Mantelfläche (30) verbunden sind, die in der relativen Verschiebungsrichtung der beiden gegenüberliegenden Wände (101, 2) fortlaufend dehnbar und nach außen hin abgedichtet ist, und wobei eine vorbestimmte für das Stereolithographieverfahren vorgesehene Harzmenge aus einem Vorratsbehälter im Inneren der durch die beiden gegenüberliegenden Wände und durch die Mantelwand zur Umgebung hin dicht abgegrenzten Aufnahmekammer bereitstellbar oder zuführbar ist.

12. Kartusche nach Anspruch 11, wobei die Wände mit Fortsätzen versehen sind, die mit komplementären Kupplungsmitteln verbunden sind, welche jeweils an einem stationären Träger und an einem gegenüberliegenden relativ zu dem stationären Träger beweglichen Träger vorgesehen sind.

13. Kartusche nach Anspruch 11 oder 12, **dadurch gekennzeichnet, dass** sie die Merkmale nach einem oder mehreren der Ansprüche 1 bis 11 aufweist.

14. Kombination einer Vorrichtung zur Herstellung von Stereolithographie-Gegenständen nach einem oder mehreren der Ansprüche 1 bis 10 mit mindestens einer Kartusche nach einem oder mehreren der Ansprüche 11 bis 13 oder mit einer Mehrzahl von Kartuschen, die sowohl miteinander identisch als auch hinsichtlich Form, Endvolumen und Harzmenge voneinander verschieden sind.

15. Verfahren zur Herstellung von Stereolithographie-Gegenständen mit einer Vorrichtung nach einem oder mehreren der Ansprüche 1 bis 10 und mindestens einer Kartusche nach einem oder mehreren der Ansprüche 11 bis 13, wobei das Verfahren folgende Schritte umfasst:
a) Positionieren des Harzes im Behälter auf der ersten, die Bodenseite des Behälters bildenden Wand (101),
b) Positionieren der beweglichen Wand (2) in der zu der ersten Wand nächstliegenden Position,
c) Einschalten der elektromagnetischen Strahlungsquelle (5),
d) fortschreitendes Wegbewegen der beweglichen Wand (2) und
e) Ändern der Intensitätsverteilung der elektromagnetischen Strahlung in der Ebene parallel zur ersten Wand, wobei die Änderung der Intensitätsverteilung mit der Änderung des Abstandes synchronisiert ist, mit dem die zweite Wand von der ersten Wand wegbewegt wird, entsprechend einer Positionsänderung der Schnittebene des herzustellenden Gegenstandes entlang der Achse des Gegenstandes (O) parallel zu der Richtung, in der die zweite Wand von der ersten Wand wegbewegt wird, bis der Abstand der beiden Wände der vollständigen Erstreckung des herzustellenden Gegenstandes entspricht oder größer ist als die vollständige Erstreckung des Gegenstandes entlang seiner Achse parallel zu der Richtung, in der die zweite Wand von der ersten Wand wegbewegt wird, wobei das Verfahren ferner **dadurch gekennzeichnet ist, dass** die Harzaufnahme und der Polymerisationsprozess in einer Gehäusekammer (31) mit einem Volumen stattfinden, das in der Richtung dehnbar ist, in der sich die erste Wand und die zweite Wand voneinander weg bewegen, wobei die Kammer zumindest während des Produktionsprozesses von der äußeren Umgebung dichtend getrennt ist, wobei die in der Bewegungsrichtung der ersten Wand und der zweiten Wand voneinander weg orientierte Kammermantelwand in der Richtung dehnbar ist, in der sich die erste Wand und die zweite Wand voneinander weg bewegen.

16. Verfahren nach Anspruch 15, **dadurch gekennzeichnet, dass** auch die Aufnahme des Endprodukts innerhalb der von der äußeren Umgebung abgedichteten Aufnahmekammer stattfindet.

17. Verfahren nach Anspruch 15 oder 16, **dadurch gekennzeichnet, dass** es die Aufnahme des Harzes zur Herstellung eines vorbestimmten Gegenstandes in fluider Form vor Beginn des Produktionsprozesses, während des Produktionsprozesses und des am Ende des Produktionsprozesses erhaltenen Endgegenstandes innerhalb desselben volumenveränderlichen Aufnahmeraumes vorsieht und dabei den zur Außenumgebung hin abgedichteten Zustand während des gesamten Prozesses des Wegbewegens der ersten Wand und der zweiten Wand voneinander bei gleichzeitiger fortlaufender Polymerisation der einzelnen, die Harzschichtabfolge bildenden Harzschichten zum Erhalten des Endgegenstandes aufrechterhält.

18. Verfahren nach einem oder mehreren der vorhergehenden Ansprüche 15 bis 17 in Kombination mit einer Stereolithographievorrichtung umfassend
einen Behälter für ein durch ein Polymerisationsverfahren zu verfestigendes Harz,
wobei der Behälter zwei gegenüberliegende Wände aufweist, die in einer Richtung aufeinander zu und voneinander weg bewegbar sind, und zwar im Wesentlichen parallel zueinander oder entlang einer Strecke, deren Achse quer zur Oberfläche von wenigstens einer der beiden Wände verläuft;
eine erste, in Ausbreitungsrichtung einer elektromagnetischen Strahlung, mit der das Harz bestrahlt wird, transparente Wand;
eine zweite, aus einer mit dem Harz in Kontakt stehenden, beweglichen Haftplattform bestehende Wand,
einen motorisierten Mechanismus, der die bewegliche Plattform durch eine stufenlose Bewegung oder durch Vorschub schritte fortlaufend von der ersten Wand wegbewegt;
eine elektromagnetische Strahlungsquelle, die ein elektromagnetisches Strahlenbündel mit einer in einer Ebene parallel zur ersten Wand vorbestimmten Verteilung der Strahlungsintensität erzeugt;
einen Modulator für die Intensität der elektromagnetischen Strahlung, der die Intensitätsverteilung entlang der Ebene parallel zu der ersten Wand derart ändert, dass sie mit der Vorwärtsbewegung der beweglichen Plattform synchronisiert ist und der Querschnittsform eines herzustellenden Gegenstands entlang einer Schnittebene des Gegenstands entspricht, wobei die Schnittebene parallel zu der ersten Wand ist und den herzustellenden Gegenstand in einer Position entlang seiner Achse schneidet, die zur Wegbewegungsrichtung der beweglichen Plattform von der ersten Wand parallel ist, wobei die Position dem Abstand zwischen der ersten Wand und der beweglichen Plattform entspricht.

19. Verfahren nach einem oder mehreren der Ansprüche 15 bis 18, **dadurch gekennzeichnet, dass** es den Druckverlust im Inneren des volumenveränderlichen Gehäuses aufgrund der Ausdehnung des besagten Volumens ausgleicht, durch eine gesteuerte Zufuhr von Gas oder Luft, die einer Kontrolle der Reinheit und/oder einer Dekontamination von Umweltstoffen unterliegt.

20. Verfahren nach einem oder mehreren der vorhergehenden Ansprüche 15 bis 19, **dadurch gekennzeichnet, dass** es die Zufuhr von Harzmengen oder die Entnahme von nicht verbrauchten Harzresten und das Lagern oder Laden dieser Reste in eine neue Kartusche oder Kammer vorsieht.

21. Verfahren nach einem oder mehreren der vorhergehenden Ansprüche 15 bis 20, wobei die Zufuhr von auf den Trocknungsprozess einwirkenden Gasen oder von die Kammer und/oder das hergestellte Objekt spülenden Inertgasen oder Fluiden vorgesehen ist.

## Revendications

1. Appareil de stéréolithographie comprenant
un récipient pour de la résine destinée à être solidifiée par un procédé de polymérisation,
lequel récipient comprend deux parois opposées (101; 2) mobiles dans une direction se rapprochant et s'éloignant entre elles, essentiellement parallèlement entre elles ou le long d'un trajet dont l'axe est transversal à la surface d'au moins l'une desdites deux parois;
une première paroi (101) étant transparente à la direction de propagation d'un rayonnement électromagnétique au moyen duquel ladite résine est rayonnée;
une seconde paroi étant composée d'une plateforme mobile d'adhésion (2) mise en contact avec la résine,
un mécanisme motorisé éloignant progressivement la plateforme mobile (2) de la première paroi (101) avec un mouvement continu ou par étapes d'avancement;
une source de rayonnement électromagnétique (5) générant un faisceau de rayonnement électromagnétique avec une distribution prédéterminée de l'intensité de la variable de rayonnement sur un plan parallèle à ladite première paroi (101);
un modulateur de l'intensité du rayonnement électromagnétique qui modifie la distribution de son intensité le long du plan parallèle à ladite première paroi (101) d'une manière synchronisée avec l'avancement de la plateforme mobile (2) et d'une manière correspondante à la forme de coupe transversale d'un objet (O) à produire, le long d'un plan de coupe de l'objet, lequel plan de coupe est parallèle à ladite première paroi (101) et intersecte l'objet à produire dans une position le long de son axe parallèle à la direction éloignant la plateforme mobile (2) de ladite première paroi (101), laquelle position correspond à la distance entre ladite première paroi et ladite plateforme mobile,
et dans lequel ladite première paroi (101) et ladite seconde paroi agissant en tant que la plateforme mobile (2) sont connectées entre elles le long de tout le bord périphérique par une paroi de coque (30) réalisée extensible dans la direction déplaçant lesdites deux parois l'une par rapport à l'autre, tandis que ladite première paroi (101), ladite seconde paroi (2) et la paroi de coque (30) forment une chambre (31) progressivement adaptable à la forme de l'objet à produire et étanche vers l'environnement externe, et
une cuve (1) étant prévue, laquelle cuve est délimitée par la première paroi (101) et une paroi de coque, et
dans lequel la cuve (1) et la seconde paroi mobile (2) sont réalisées sous forme de cartouches ou d'éléments pouvant être détachés de et attachés à l'appareil.

2. Appareil selon la revendication 1, dans lequel la chambre (31) composée de ladite première paroi (101), de la paroi de coque (30) et de la paroi mobile (2) est réalisée selon le principe d'un système piston/plongeur.

3. Appareil selon la revendication 1 ou 2, dans lequel la résine peut être alimentée depuis le réservoir (50) par l'aspiration exercée par le mouvement de la seconde paroi mobile (2) le long de la paroi de coque (30) et/ou par des moyens d'alimentation actifs, tels que par exemple des pompes ou similaire, au moyen desquels la résine est prélevée du réservoir et poussée sous pression contrôlée dans la cuve (1) délimitée par la première paroi (101) et la paroi coque (2).

4. Appareil selon l'une ou plusieurs des revendications précédentes, dans lequel la cuve (1) et la seconde paroi mobile (2) sont solidement fixées à des supports (40; 102) et font partie de l'appareil, chaque objet étant produit à l'intérieur de la même cuve et par la même paroi mobile.

5. Appareil selon la revendication 1, **caractérisé en ce que** la paroi coque extensible (30) est réalisée selon au moins l'un ou selon une combinaison des modes suivantes:
- une feuille ou une membrane de matériau extensible connectant les bords périphériques de la paroi de fond (101) et de la plateforme mobile (2) entre eux;
- une paroi de coque (30) sous forme de soufflet;
- une paroi composée de portions télescopiquement engagées entre elles de manière coulissante et étanche;
- combinaisons de telles solutions pour au moins une partie de la longueur totale de ladite paroi de coque dans la direction de déplacement relatif de la paroi de fond et de la plateforme.

6. Appareil selon l'une ou plusieurs des revendications précédentes, **caractérisé en ce qu'**il est prévu pour la chambre de confinement étanche (31) un système compensant la perte de pression à l'intérieur de ladite chambre due à l'augmentation de volume lors de l'éloignement de la plateforme mobile (2) et de la paroi de fond (101) l'une par rapport à l'autre.

7. Appareil selon l'une ou plusieurs des revendications précédentes, **caractérisé en ce que** la chambre (31) est pourvue d'une entrée pour la résine pouvant être connectée de manière séparable à un conduit alimentant la résine depuis le réservoir de résine (50) et qui est solidement associée à, ou pouvant également être remplaçable à, l'appareil de production d'objets par stéréolithographie ou qui est réalisée sous la forme d'un appendice fixe ou amovible de l'une des parois délimitant ladite chambre (31) et communiquant avec ladite chambre de manière à pouvoir être ouvert et fermé.

8. Appareil selon l'une ou plusieurs des revendications précédentes, dans lequel la chambre (31) présente une sortie de prélèvement de résine résiduelle en combinaison avec des moyens de prélèvement de résine résiduelle et des moyens pour stocker la résine résiduelle prélevée.

9. Appareil selon l'une ou plusieurs des revendications précédentes, dans lequel ladite chambre (31) peut être réutilisée pour produire plusieurs objets, la chambre étant pourvue d'une ouverture ouvrable et refermable pour prélever les objets finis et/ou pour alimenter de la nouvelle résine.

10. Appareil selon l'une ou plusieurs des revendications précédentes, dans lequel la chambre présente une ou plusieurs entrée(s) pour alimenter une ou plusieurs substance(s) affectant le procédé de séchage et/ou pour alimenter des fluides de nettoyage de la chambre et/ou de l'objet et/ou pour alimenter de la résine.

11. Cartouche de production d'objets par un procédé de stéréolithographie réalisé par un appareil de stéréolithographie selon l'une ou plusieurs des revendications précédentes, dans laquelle la cartouche est composée d'une paire de parois opposées (101; 2) ayant une forme sensiblement plate et au moins l'une d'entre elles étant transparente, lesquelles parois sont connectées entre elles par une surface de coque commune (30) étant progressivement extensible et étanche vers l'extérieur, dans la direction de déplacement relative desdites deux parois opposées (101; 2) et une quantité de résine prédéterminée étant destinée pour le procédé de stéréolithographie étant fournie par ou pouvant être alimentée depuis un réservoir à l'intérieur de la chambre de confinement délimitée de manière étanche vers l'environnent par lesdites deux parois opposées et par ladite paroi de coque.

12. Cartouche selon la revendication 11, dans laquelle lesdites parois sont pourvues d'extensions se connectant à des moyens d'accouplement complémentaires prévus respectivement sur un support fixe et sur un support opposé mobile par rapport audit support fixe.

13. Cartouche selon la revendication 11 ou 12, **caractérisée en ce qu'**elle présente des caractéristiques selon l'une ou plusieurs des revendications 1 à 11.

14. Combinaison d'un appareil de production d'objets par stéréolithographie selon l'une ou plusieurs des revendications 1 à 10 avec au moins une cartouche selon l'une ou plusieurs des revendications 11 à 13 ou avec une pluralité de cartouches à la fois identiques entre elles et différentes entre elles en ce qui concerne la forme, le volume final et la quantité de résine.

15. Méthode de production d'objets par stéréolithographie avec un appareil selon l'une ou plusieurs des revendications 1 à 10 et au moins une cartouche selon l'une ou plusieurs des revendications 11 à 13, laquelle méthode prévoit les étapes suivantes:
a) placer de la résine dans le récipient sur la première paroi (101) formant la face inférieure dudit récipient,
b) placer la paroi mobile (2) dans la position la plus proche de ladite première paroi,
c) alimenter la source de rayonnement électromagnétique (5),
d) éloigner progressivement la paroi mobile (2) et
e) changer la distribution de l'intensité du rayonnement électromagnétique dans le plan parallèle à ladite première paroi, lequel changement de la distribution de l'intensité est synchronisé avec le changement de la distance éloignant la seconde paroi de la première paroi et correspondant à un changement de la position du plan de coupe de l'objet à produire le long de l'axe dudit objet (O) parallèle à la direction de déplacement de ladite seconde paroi de ladite première paroi jusqu'à ce que la distance desdites deux parois corresponde à l'extension complète ou soit supérieure à ladite extension complète de l'objet à produire le long de son axe parallèle à la direction éloignant ladite second paroi de ladite première paroi, le procédé ci-dessus est en outre **caractérisé en ce que** le confinement de la résine et le procédé de polymérisation se produisent dans une chambre de logement (31) avec un volume extensible dans la direction éloignant la première paroi et la second paroi entre elles, laquelle chambre est séparée de manière étanche de l'environnement externe au moins pendant le procédé de production, la paroi de coque de ladite chambre orientée dans la directions éloignant la première paroi et la seconde paroi entre elles étant extensible dans ladite direction éloignant la première paroi et la seconde paroi entre elles.

16. Méthode selon la revendication 15, **caractérisée en ce qu'**elle prévoit également que le confinement du produit final se produise à l'intérieur de ladite chambre de confinement, de manière séparée et étanche de l'environnement externe.

17. Méthode selon la revendication 15 ou 16, **caractérisée en ce qu'**elle prévoit que la résine pour produire un objet prédéterminé à contenir sous forme fluide, avant de commencer le procédé de production et pendant le procédé de production, et l'objet fini obtenu à la fin du procédé de production est à contenir à l'intérieur du même compartiment de logement à volume variable, tout en maintenant la condition d'étanchéité vers l'environnement externe pendant tout le procédé d'éloignement de la première paroi et de la seconde paroi entre elles en même temps que la polymérisation progressive des couches de résine individuelles formant la séquence de couches de résine pour obtenir l'objet fini.

18. Méthode selon l'une ou plusieurs des revendications précédentes 15 à 17 en combinaison avec l'appareil de stéréolithographie comprenant:
un récipient pour de la résine destinée à être solidifiée par un procédé de polymérisation,
lequel récipient comprend deux parois opposées mobiles dans une direction se rapprochant et s'éloignant entre elles, essentiellement parallèlement entre elles ou le long d'un trajet dont l'axe est transversal à la surface d'au moins l'une desdites deux parois;
une première paroi étant transparente à la direction de direction de propagation d'un rayonnement électromagnétique avec lequel ladite résine est rayonnée;
une seconde paroi étant composée d'une plateforme mobile d'adhésion mise en contact avec la résine,
un mécanisme motorisé éloignant progressivement la plateforme mobile de la première paroi avec un mouvement continu ou par étapes d'avancement;
une source de rayonnement électromagnétique générant un faisceau de rayonnement électromagnétique avec une distribution prédéterminée de l'intensité de la variable de rayonnement sur un plan parallèle à ladite première paroi;
un modulateur de l'intensité du rayonnement électromagnétique qui modifie la distribution de son intensité le long du plan parallèle à ladite première paroi d'une manière synchronisée avec l'avancement de la plateforme mobile et d'une manière correspondante à la forme de coupe transversale d'un objet à produire, le long d'un plan de coupe de l'objet, lequel plan de coupe est parallèle à ladite première paroi et intersecte l'objet à produire dans une position le long de son axe parallèle à la direction éloignant la plateforme mobile de ladite première paroi, laquelle position correspond à la distance entre ladite première paroi et ladite plateforme mobile.

19. Méthode selon l'une ou plusieurs des revendications 15 à 18, **caractérisée en ce qu'**elle prévoit de compenser pour la perte de pression à l'intérieur du compartiment à volume variable due à l'expansion dudit volume, par l'apport contrôlé de gaz ou d'air soumis au contrôle de la pureté et/ou à la décontamination des agents environnementaux.

20. Méthode selon l'une ou plusieurs des revendications précédentes 15 à 19, **caractérisée en ce qu'**elle prévoit d'alimenter des quantités de résine ou de prélever les résines résiduelles non utilisées et de stocker ou charger lesdits résidus dans une nouvelle cartouche ou chambre.

21. Méthode selon l'une ou plusieurs des revendications précédentes 15 à 20, dans laquelle il est prévu de fournir des gaz qui agissent sur le procédé de séchage ou des gaz inertes ou des fluides lavant la chambre et/ou l'objet produit.
